# EUROPÄISCHE PATENTANMELDUNG

(11) **EP 4 730 169 A1**
(43) Veröffentlichungstag der Anmeldung: **22.04.2026**
(21) Anmeldenummer: 25207883.7
(22) Anmeldetag: 10.10.2025
(51) Int. Cl.: G06F 21/32, G06F 21/44, H04L 9/40, H04W 12/06, H04W 12/60, H04W 12/79, H04L 9/32

(54) **SYSTEM UND VERFAHREN ZUR AUTHENTIFIZIERUNG EINER SENDERVORRICHTUNG MIT EINEM SENSOR BEI EINER EMPFÄNGERVORRICHTUNG**

(30) Priorität: 18.10.2024 DE 102024130332
(71) Anmelder: TrustNXT GmbH, 22761 Hamburg (DE)
(72) Erfinder: Adank, Sebastian, 22926 Ahrensburg (DE)
(74) Vertreter: Eisenführ Speiser

(57) **Zusammenfassung**

Die Erfindung betrifft ein Verfahren zur Authentifizierung einer Sendervorrichtung (14) mit einem Sensor (15) bei einer Empfängervorrichtung (16). Das Verfahren umfasst ein vorzugsweise Aktivieren des Sensors (15), insbesondere eines Bildsensors, der Sendervorrichtung (14), ein Erfassen von Sensordaten (29) des Sensors (15) durch die Sendervorrichtung (14), ein Aufbereiten der erfassten Sensordaten (29) und ein Erkennen mindestens eines Hardwaremerkmals, wie eines Sensormerkmals, insbesondere eines Sensorfehlers, in den aufbereiteten Sensordaten (30), ein Erzeugen von Authentisierungsdaten (32) in Abhängigkeit von dem erkannten Hardwaremerkmal, ein Vergleichen der Authentisierungsdaten (32) mit für die Sendervorrichtung (14) hinterlegten Identifikationsdaten zum Erhalten eines positiven oder negativen Vergleichsergebnisses (36) mit einer von der Sendervorrichtung (14) unterschiedlichen Authentifikationsvorrichtung (18) oder Empfängervorrichtung (16) und ein Authentifizieren der Sendervorrichtung (14) bei einer Empfängervorrichtung (16) im Fall eines positiven Vergleichsergebnisses (36) und Ablehnen einer Authentifizierung bei der Empfängervorrichtung (16) im Fall eines negativen Vergleichsergebnisses (36).

Die Erfindung betrifft ferner ein System (10) mit einer Sendervorrichtung (14), einer Empfängervorrichtung (16) und vorzugsweise einer Authentifikationsvorrichtung (18), eine Vorrichtung (12), die eingerichtet ist, die auf eine Empfängervorrichtung (16), eine Authentifikationsvorrichtung (18) und/oder eine Sendervorrichtung (14) bezogenen Schritte des Verfahrens auszuführen und eine Software, die, wenn sie mit einem Prozessor ausgeführt wird, den Prozessor veranlasst, die auf eine Empfängervorrichtung (16), eine Authentifikationsvorrichtung (18) oder eine Sendervorrichtung (14) bezogenen Schritte des Verfahrens auszuführen.

## Beschreibung

Die Erfindung betrifft ein Verfahren und ein System zur Authentifizierung von Sendervorrichtungen mittels Sensordaten. Insbesondere betrifft die Erfindung ein Verfahren zur Erkennung und Nutzung von Hardwaremerkmalen, wie Sensorfehlern, zur Erzeugung von Authentisierungsdaten und deren Vergleich mit hinterlegten Identifikationsdaten zur sicheren Authentifizierung bei einer Empfängervorrichtung.

Auf dem Gebiet der Authentifizierungstechnologien ist es üblich, verschiedene Methoden zur Verifizierung der Identität von Benutzern zu verwenden. Diese Methoden umfassen typischerweise die Verwendung von Daten, wie Passwörtern, biometrischen Daten, wie Fingerabdrücken oder Gesichtserkennung, sowie kryptografischen Schlüsseln. Bekannte Systeme zur Authentifizierung beruhen oft auf dem Empfang der Daten und dem Vergleich der Daten mit Identifikationsdaten, die entweder lokal auf dem Gerät oder auf einem zentralen Server gespeichert sind. Diese Ansätze haben sich als effektiv erwiesen, um unbefugten Zugriff auf Geräte zu verhindern und die Sicherheit von Kommunikationssystemen zu gewährleisten.

Durch die genannten Authentifizierungstechnologien wird ein Zugriff auf diverse Geräte, wie auch Überwachungskameras, somit nur befugten Personen erlaubt. Bei diesen Verfahren erfolgt jedoch in der Regel nur die Authentifikation des Benutzers beim Gerät. Das Gerät selbst authentifiziert sich üblicherweise jedoch nicht beim Benutzer. Beim Beispiel von Überwachungskameras verlässt sich der Benutzer demnach auf das dem Benutzer dargestellte Bild, das etwa einen zu überwachenden Bereich zeigt, den der Benutzer kennt, so dass der Benutzer dem Gerät auch ohne Authentifikation vertraut.

Gerade durch die jüngsten technologischen Entwicklungen im Bereich der künstlichen Intelligenz besteht jedoch zunehmend die Gefahr, das Bild-, Video- und Audiodaten mit nahezu beliebigen Inhalten erzeugt oder bestehende Bild-, Video- und Audiodaten gefälscht werden können. Um beim oben genannten Beispiel der Überwachungskamera zu bleiben, ist es beispielsweise möglich eine ausgespähte Bild- oder Videodatei, die einen für einen Benutzer bekannte Umgebung anzeigt, mit zusätzlichen Inhalten oder künstlich erzeugten Bildbewegungen so zu manipulieren, dass diese für einen Benutzer nicht von zurzeit aufgenommenen Videodaten unterschieden werden können. Es besteht demnach die Gefahr, dass ein Benutzer anstatt eines Live-Bildes oder -Videos einer Überwachungskamera ein künstlich erzeugtes Bild oder Video sieht.

Um dieser zuletzt genannten Problematik zu begegnen, werden auch Geräte angeboten, die etwa über SSL-Verschlüsselung verschlüsselte Daten senden. Für solche Geräte muss jedoch ein Zertifikat durch einen Hersteller von einer vertrauenswürdigen Zertifizierungsstelle bereitgestellt werden. Hierdurch entsteht ein zusätzlicher Aufwand für den Hersteller. Die Kosten einer Zertifikatsbereitstellung für solche Geräte entsprechen daher einem hohen Anteil der Gesamtkosten, und können, insbesondere wenn solche Geräte kostengünstig hergestellt werden können, sogar einem höheren Anteil als die Herstellungskosten an den Gesamtkosten entsprechen.

Die vergleichsweise höheren Kosten zur Bereitstellung einer sicheren Übertragung führen daher dazu, dass überwiegend Geräte, wie die genannten Überwachungskameras, Einsatz finden, die eine unverschlüsselte Übertragung der Daten unterstützen und daher anfällig für die genannte Problematik sind.

In der prioritätsbegründenden deutschen Patentanmeldung hat das Deutsche Patent- und Markenamt die folgenden Dokumente recherchiert: DE 10 2019 134 703 A1 und WO 2023/016682 A1.

Es ist daher Aufgabe der vorliegenden Erfindung eine Verfahren zur sicheren Kommunikation zwischen Geräten bereitzustellen, das kostengünstig ist und eine Alternative zu bekannten Verfahren bietet. Insbesondere soll ein Verfahren zur Authentifizierung einer Sendervorrichtung gefunden werden, das einen oder mehrere der Nachteile der bekannten Authentifizierungsmethoden überwindet.

Hierzu betrifft die Erfindung ein Verfahren zur Authentifizierung einer Sendervorrichtung nach Anspruch 1. Darüber hinaus ergeben sich weitere vorteilhafte Ausführungsformen aus den abhängigen Ansprüchen und der Beschreibung.

Gemäß der Erfindung wird ein Verfahren zur Authentifizierung einer Sendervorrichtung mit einem Sensor bei einer Empfängervorrichtung vorgeschlagen, das mehrere Schritte umfasst. In einem Schritt des Verfahrens wird vorzugsweise ein Sensor einer Sendervorrichtung aktiviert, wobei es sich insbesondere um einen Bildsensor handeln kann. Der Sensor kann auch als Mikrofon oder biometrischer Sensor, wie ein Fingerabdrucksensor, ausgebildet sein. Eine Sendervorrichtung beschreibt hier allgemein vorzugsweise eine Vorrichtung, die einen Sensor aufweist und die beispielsweise eingerichtet ist, Daten, die von dem Sensor stammen, an eine weitere Vorrichtung zu übertragen. Der Begriff Sendervorrichtung schließt nicht aus, dass die Sendervorrichtung auch eingerichtet ist, Daten von einer weiteren Vorrichtung zu empfangen. Die Übertragung kann hierbei beispielsweise kabelgebunden oder drahtlos sein, so dass die Sendervorrichtung beispielsweise eine Mobilfunkschnittstelle, Ethernetschnittstelle oder allgemein eine Schnittstelle zur Verbindung mit einer weiteren Vorrichtung über ein internes oder öffentliches Netzwerk, wie das Internet, aufweist. Es kann beispielsweise auch vorgesehen sein, dass die Sendervorrichtung und die Empfängervorrichtung Bestandteil einer einzelnen Einheit, wie eines Computers, sind, so dass die Übertragung eine interne Übertragung ist. Vorzugsweise sind Sendervorrichtung und Empfängervorrichtung jedoch in unterschiedlichen Einheiten angeordnet und vorzugsweise örtlich trennbar.

Durch die Aktivierung des Sensors wird die Erfassung von Sensordaten ermöglicht, die anschließend von der Sendervorrichtung erfasst werden. Diese Sensordaten werden dann aufbereitet, um sie für die weitere Verarbeitung vorzubereiten. Das Aufarbeiten kann einen oder mehrere Aufbereitungsschritte umfassen. Der oder die Aufbereitungsschritte können in der Sendervorrichtung ausgeführt werden. Der oder die Aufbereitungsschritte können auch in einer Empfängervorrichtung ausgeführt werden, nachdem die erfassten Sensordaten von der Sendereinrichtung an die Empfängervorrichtung übertragen wurden. Es können auch mehrere Aufbereitungsschritte oder Teilaufbereitungsschritte vorgesehen sein, wobei ein oder mehrere dieser Teilaufbereitungsschritte in der Sendervorrichtung und ein oder mehrere dieser Teilaufbereitungsschritte nach dem Senden der teilweise aufbereiteten Sensordaten von der Sendervorrichtung an die Empfängervorrichtung in der Empfängervorrichtung ausgeführt werden.

Der Sensor kann auch als Sensoreinheit bezeichnet werden. Ein Sensor, also die Sensoreinheit, umfasst gemäß der Erfindung demnach zumindest ein elektronisches Bauteil, wie einen Detektor, Aufnehmer oder Fühler, der physikalische oder chemische Eigenschaften oder eine Beschaffenheit seiner Umgebung in elektrische Signale umwandelt. Der Sensor, also die Sensoreinheit, umfasst vorzugsweise aber zusätzlich auch eine verarbeitende Elektronik, wie integrierte, mikroelektronische oder elektronische Schaltungen, Digitale Signal Prozessoren (DSP), Verstärker oder Wandler, die die elektrischen Signale weiterverarbeitet. Entsprechend können Sensorsignale die gewandelten elektrischen Signale, die auch als Rohdaten bezeichnet werden, aber auch Signale bezeichnen, die nach der Verarbeitung der Rohdaten durch die zuletzt nachgeschaltete verarbeitende Elektronik bereitgestellt werden. Sensorsignale oder die nach einem oder mehreren Aufbereitungsschritten aufbereiteten Sensorsignale können demnach auch solche Signale sein, die beispielsweise durch eine Drahtlosübertragung, beispielsweise per Funk, übertragen wurden und durch ihre Übertragung, nämlich die sendende und empfangende Hardware, verarbeitet oder aufbereitet wurden.

Gemäß einem weiteren Schritt des Verfahrens wird mindestens ein Hardwaremerkmal, wie etwa ein Sensormerkmal, beispielsweise ein Sensorfehler, in den aufbereiteten Sensordaten erkannt. Diese Merkmale können spezifische Unregelmäßigkeiten oder charakteristische Eigenschaften des Sensors, umfassend die die Sensorsignale verarbeitende Hardware, sein, die zur Identifizierung der Sendervorrichtung genutzt werden können. Hardwaremerkmale entsprechen somit solchen für den Sensor, umfassend die die Sensorsignale verarbeitende Hardware, spezifischen Merkmalen, die bei der Erzeugung und Verarbeitung der Sensorsignale in den Sensorsignalen, also den Daten des Sensors, erkennbar und identifizierbar sind. Ein Beispiel für ein Sensormerkmal ist ein fehlerhaftes Bauteil, wie defekter Transistor, in einer elektronischen Schaltung, der die Ausgangsdaten der elektronischen Schaltung derart ändert, dass diese charakteristisch für genau diese elektronische Schaltung sind. Pixelfehler oder Rauschspitzen können ein Anzeichen für das Hardwaremerkmal sein. Ein Erkennen eines Hardwaremerkmals umfasst hier vorzugsweise nicht zwangsläufig, dass genau die Komponente oder das Bauteil identifiziert wird, aus dem eine charakteristische Eigenschaft der Sensordaten resultiert. Vielmehr umfasst das Erkennen eines Hardwaremerkmals vorzugsweise das Erkennen einer Auffälligkeit oder Unregelmäßigkeit in den Sensordaten oder aufbereiteten Sensordaten, die wiederkehrend ist und als Anzeichen für einen Hardwarefehler oder ein von der Norm abweichendes Verhalten einer Hardware zu werten ist.

In Abhängigkeit von dem erkannten Hardwaremerkmal werden Authentisierungsdaten erzeugt, die dann mit hinterlegten Identifikationsdaten der Sendervorrichtung verglichen werden. Dieser Vergleich erfolgt durch eine von der Sendervorrichtung unterschiedliche Authentifikationsvorrichtung oder Empfängervorrichtung, um ein Vergleichsergebnis zu erhalten, das entweder positiv oder negativ sein kann. Die für den Vergleich benötigten Identifikationsdaten liegen demnach entweder in der Authentifikationsvorrichtung oder Empfängervorrichtung vor, in dem diese dort beispielsweise in einem Speicher gespeichert sind. Ein Vergleichen der Authentisierungsdaten mit für die Sendervorrichtung hinterlegten Identifikationsdaten kann auch als Verifikation der Authentisierungsdaten mit den Identifikationsdaten verstanden werden. Der Vergleich umfasst demnach eine Prüfung, ob die Authentisierungsdaten solchen Daten entsprechen, die unter Berücksichtigung der Identifikationsdaten erwartet werden.

Ein positives Vergleichsergebnis entspricht demnach beispielsweise einer erfolgreichen Verifikation oder dass die Authentisierungsdaten solchen Daten entsprechen, die unter Berücksichtigung der Identifikationsdaten erwartet werden. Das heißt also nicht, dass eine vollständige Übereinstimmung der Identifikationsdaten mit den Authentisierungsdaten vorliegen muss, vorzugsweise genügt eine Übereinstimmung oberhalb eines vordefinierte Schwellenwerts, etwa oberhalb von 50 % oder 70 % der vergleichbaren Merkmale von Identifikationsdaten und Authentisierungsdaten. Zumindest müssen die Authentisierungsdaten eine vordefinierte minimale Ausprägung, die basierend auf den Identifikationsdaten festgelegt ist oder wird, erfüllen. Ein negatives Vergleichsergebnis entspricht demnach beispielsweise einer erfolglosen Verifikation oder dass die Authentisierungsdaten von solchen Daten abweichen, die unter Berücksichtigung der Identifikationsdaten erwartet werden. Demnach wird beispielsweise von einer erfolglosen Verifikation ausgegangen, wenn eine Übereinstimmung unterhalb oder auch nur gering unterhalb des vordefinierten Schwellenwerts, etwa unterhalb von 50 % oder 70 % der vergleichbaren Merkmale von Identifikationsdaten und Authentisierungsdaten, liegt oder die Authentisierungsdaten die vordefinierte minimale Ausprägung nicht erfüllen.

Im Fall eines positiven Vergleichsergebnisses wird die Sendervorrichtung bei der Empfängervorrichtung authentifiziert, während bei einem negativen Vergleichsergebnis die Authentifizierung abgelehnt wird oder nicht durchgeführt werden kann.

Durch das Verfahren ist die Identität einer Sendervorrichtung und insbesondere auch die Sensordaten der Sendervorrichtung eindeutig identifizierbar. Es kann demnach sichergestellt werden, dass Sensordaten, wie Bilddaten, die von einer Sendervorrichtung, wie beispielsweise einer Überwachungskamera, stammen, tatsächlich von dieser Sendervorrichtung stammen. Ein Benutzer, der mit einer Empfängervorrichtung auf die Sendervorrichtung zugreift, kann somit sicherstellen, dass Bild- oder Videodaten von einer bestimmten Sendervorrichtung stammen.

Das Verfahren ist beispielsweise auch während einer bestehenden Videokonferenz anwendbar, wenn ein erster Benutzer, der die Sendervorrichtung als erste Teilnehmervorrichtung für die Videokonferenz verwendet, und ein zweiter Benutzer, der die Empfängervorrichtung als zweite Teilnehmervorrichtung für die Videokonferenz verwendet, gegenseitig Video- und Audiodatenströme miteinander austauschen. Zu Beginn oder während die Sendervorrichtung den Videodatenstrom an die Empfängervorrichtung überträgt, können beispielsweise in der Empfängervorrichtung die Authentisierungsdaten aus den mit der Empfängervorrichtung empfangenen aufbereiteten Sensordaten erzeugt und mit in der Empfängervorrichtung hinterlegten Identifikationsdaten verglichen werden.

So kann während beispielsweise parallel zur Übertrag des Videodatenstroms von der Sendervorrichtung zur Empfängervorrichtung die Authentifizierung der Sendervorrichtung, also eine Verifikation, dass es sich um eine bestimmte Sendervorrichtung handelt, erfolgen, ohne dass zusätzliche Daten übertragen werden müssen.

Das Verfahren stellt sicher, dass aktuelle und relevante Daten verwendet werden. Die Aufbereitung der Sensordaten und das Erkennen von Hardwaremerkmalen ermöglichen eine präzise Identifizierung der Sendervorrichtung. Das Erzeugen von Authentisierungsdaten in Abhängigkeit von spezifischen Hardwaremerkmalen ermöglicht die Authentifizierung auf Basis von einzigartigen und schwer zu fälschenden Merkmalen. Der Vergleich der Authentisierungsdaten mit hinterlegten Identifikationsdaten kann eine genauere und zuverlässigere Authentifizierung ermöglichen. Insgesamt kann dieses Verfahren dazu beitragen, die Sicherheit und Integrität der Kommunikation zwischen Sendervorrichtung und Empfängervorrichtung zu verbessern, indem es sicherstellt, dass nur autorisierte Geräte authentifiziert werden.

Das Aktivieren des Sensors, insbesondere eines Bildsensors, der Sendervorrichtung, stellt den ersten Schritt im Authentifizierungsprozess dar. Hierbei wird der Sensor durch ein Signal oder einen Befehl der Sendervorrichtung aktiviert, um in einen betriebsbereiten Zustand versetzt zu werden. Dieser Schritt ist notwendig, um den Sensor auf die Erfassung von Sensordaten vorzubereiten.

Das Erfassen von Sensordaten des Sensors durch die Sendervorrichtung erfolgt beispielsweise unmittelbar nach der Aktivierung des Sensors. Die Sendervorrichtung sammelt dabei die vom Sensor generierten Daten, die verschiedene Informationen enthalten können, wie beispielsweise Bilddaten oder andere relevante Sensormesswerte. Diese Daten werden etwa in einem Rohformat erfasst und zur weiteren Verarbeitung bereitgestellt.

Das Aufbereiten der erfassten Sensordaten beinhaltet beispielsweise die Verarbeitung und Umwandlung der Rohdaten in ein nutzbares Format. Dieser Schritt kann verschiedene Verfahren umfassen, wie das Filtern von Rauschen, die Korrektur von Verzerrungen oder die Extraktion relevanter Merkmale. Ziel ist es, die Sensordaten in einer Form zu präsentieren, die für die nachfolgenden Schritte des Authentifizierungsprozesses geeignet ist.

Das Erkennen mindestens eines Hardwaremerkmals, wie eines Sensorfehlers, in den aufbereiteten Sensordaten entspricht einem Schritt, bei dem die aufbereiteten Daten analysiert werden, um spezifische Merkmale oder Anomalien zu identifizieren. Ein Hardwaremerkmal könnte beispielsweise ein Fehler in einem Bildpunkt des Bildsensors sein, der im Fall einer Manipulation, einer versuchten Emulation oder einem Austausch des Sensors nicht auftreten würde. Entsprechen wäre dieser Fehler entscheidend für die nachfolgende Generierung der Authentisierungsdaten.

Das Erzeugen von Authentisierungsdaten in Abhängigkeit von dem erkannten Hardwaremerkmal erfolgt auf Basis der zuvor identifizierten Merkmale. Die Authentisierungsdaten sind spezielle Informationen, die die Integrität und Authentizität der Sensordaten bestätigen sollen. Diese Daten werden durch die Sendervorrichtung, die Empfängervorrichtung selbst oder in einer Authentifikationsvorrichtung, die eine dritte Instanz neben der Sendervorrichtung und der Empfängervorrichtung darstellt, erstellt und können kryptografische Signaturen oder andere Sicherheitsmerkmale enthalten.

Das Vergleichen der Authentisierungsdaten mit für die Sendervorrichtung hinterlegten Identifikationsdaten zum Erhalten eines positiven oder negativen Vergleichsergebnisses wird von einer von der Sendervorrichtung unterschiedlichen Authentifikationsvorrichtung oder Empfängervorrichtung durchgeführt. In diesem Schritt werden die generierten Authentisierungsdaten mit zuvor gespeicherten Identifikationsdaten abgeglichen, um vorzugsweise die Echtheit der Sensordaten zu verifizieren. Das Ergebnis dieses Vergleichs kann entweder positiv oder negativ sein, abhängig davon, ob die Daten übereinstimmen.

Das Authentifizieren der Sendervorrichtung bei einer Empfängervorrichtung im Fall eines positiven Vergleichsergebnisses und Ablehnen einer Authentifizierung bei der Empfängervorrichtung im Fall eines negativen Vergleichsergebnisses bildet den abschließenden Schritt des Verfahrens. Bei einem positiven Vergleichsergebnis wird die Sendervorrichtung als authentisch anerkannt und die Kommunikation oder ein gesicherter Datenaustausch, wie eine gesicherte Datenablage, mit der Empfängervorrichtung vorzugsweise erlaubt oder einem Nutzer der Empfängervorrichtung ein Hinweis über die anerkannte Authentizität gegeben. Im Fall eines negativen Vergleichsergebnisses wird die Authentifizierung abgelehnt, was darauf hinweist, dass die Sensordaten möglicherweise manipuliert, nicht identisch oder unzuverlässig sind.

Gemäß einer ersten Ausführungsform, insbesondere, wenn der Vergleich der Authentisierungsdaten mit für die Sendervorrichtung hinterlegten Identifikationsdaten zum Erhalten eines positiven oder negativen Vergleichsergebnisses mit der Empfängervorrichtung ausgeführt wird, umfasst das Verfahren nach dem Erzeugen der Authentisierungsdaten und vor dem Vergleich das Empfangen der Identifikationsdaten für die Sendervorrichtung von einer Authentifikationsvorrichtung, die beispielsweise einer vertrauenswürdigen Zertifizierungsstelle oder einem vertrauenswürdigen Zertifikatserver entspricht. Vorzugsweise werden Identifikationsdaten nach einer Anfrage, die durch die Empfängervorrichtung an die Authentifikationsvorrichtung gesendet wird, von der Authentifikationsvorrichtung an die Empfängervorrichtung gesendet. Die Anfrage umfasst besonders bevorzugt einen Identifikator der Sendervorrichtung, der beispielsweise von der Sendervorrichtung an die Empfängervorrichtung gesendet wird.

Gemäß einer Ausführungsform werden die aufbereiteten Sensordaten von der Sendervorrichtung an die Authentifikationsvorrichtung gesendet, wobei die Authentifikationsvorrichtung die Authentisierungsdaten erzeugt und mit den Identifikationsdaten vergleicht, um das Vergleichsergebnis zu erhalten. Die Identifikationsdaten sind hierfür vorzugsweise bereits in der Authentifikationsvorrichtung gespeichert oder durch diese abrufbar. Diese Kommunikationsstruktur ermöglicht eine direkte und möglicherweise schnellere Verarbeitung der Sensordaten durch die Authentifikationsvorrichtung, was die Effizienz des Authentifizierungsprozesses steigern kann.

Eine weitere Ausführungsform sieht vor, dass die aufbereiteten Sensordaten von der Sendervorrichtung an die Empfängervorrichtung und von dort an die Authentifikationsvorrichtung gesendet werden, wobei die Authentifikationsvorrichtung die Authentisierungsdaten erzeugt und mit den Identifikationsdaten vergleicht, um das Vergleichsergebnis zu erhalten. Die Identifikationsdaten sind auch in diesem Fall vorzugsweise bereits in der Authentifikationsvorrichtung gespeichert oder durch diese abrufbar. Diese Methode kann zusätzliche Sicherheitsschichten bieten, da die Empfängervorrichtung als Zwischenstation fungiert und möglicherweise eine erste Überprüfung oder Filterung der Sensordaten vornehmen kann, bevor diese an die Authentifikationsvorrichtung weitergeleitet werden.

Eine weitere Ausführungsform umfasst, dass die aufbereiteten Sensordaten von der Sendervorrichtung an die Empfängervorrichtung gesendet werden, wobei die Empfängervorrichtung die Authentisierungsdaten erzeugt und diese dann an die Authentifikationsvorrichtung sendet. Der Vergleich wird dann ebenfalls in der Authentifikationsvorrichtung ausgeführt, um das Vergleichsergebnis zu erhalten. Die Identifikationsdaten sind wiederum vorzugsweise bereits in der Authentifikationsvorrichtung gespeichert oder durch diese abrufbar. Diese Variante könnte die Last der Datenverarbeitung auf die Empfängervorrichtung verlagern und die Authentifikationsvorrichtung entlasten, was zu einer besseren Verteilung der Rechenressourcen führen kann.

Gemäß einer weiteren Ausführungsform werden die Authentisierungsdaten aus den aufbereiteten Sensordaten in der Sendervorrichtung erzeugt und an die Authentifikationsvorrichtung, die Empfängervorrichtung oder die Empfängervorrichtung zur Weiterleitung an die Authentifikationsvorrichtung gesendet. Diese Methode könnte die Effizienz des gesamten Systems erhöhen, da die Sendervorrichtung die Authentisierungsdaten direkt erzeugt und somit die Notwendigkeit einer weiteren Datenverarbeitung durch andere Komponenten reduziert.

Außerdem ist eine Ausführungsform umfasst, bei der die aufbereiteten Sensordaten von der Sendervorrichtung an die Empfängervorrichtung gesendet werden und die Empfängervorrichtung die Authentisierungsdaten erzeugt und mit den Identifikationsdaten vergleicht, um das Vergleichsergebnis zu erhalten. Die Identifikationsdaten sind in diesem Fall vorzugsweise bereits in der Empfängervorrichtung gespeichert oder durch diese abrufbar. Diese Variante könnte die Sicherheit und Integrität der Authentifizierungsdaten erhöhen, da die Empfängervorrichtung die Daten direkt verarbeitet und somit potenzielle Manipulationen oder Fehler bei der Übertragung zwischen mehreren Geräten minimiert werden. Darüber hinaus kann auf eine zusätzliche Authentifikationsvorrichtung verzichtet werden.

Insgesamt bieten diese verschiedenen Ausführungsformen flexible und anpassbare Mechanismen zur Kommunikation und Verarbeitung von Sensordaten, um die Authentifizierung der Sendervorrichtung bei der Empfängervorrichtung effizient und sicher zu gestalten. Die spezifischen Mechanismen der Kommunikation zwischen den Komponenten tragen dazu bei, die Authentifizierungsprozesse zu optimieren, indem sie unterschiedliche Anforderungen an Sicherheit, Geschwindigkeit und Ressourcennutzung berücksichtigen.

Gemäß einer weiteren Ausführungsform umfasst das Verfahren das Ausgeben einer Aufforderung, beispielsweise einer visuellen oder auditiven Aufforderung, vorzugsweise durch die Sendervorrichtung, insbesondere eine Anzeige oder einen Lautsprecher, der Sendervorrichtung. Die Aufforderung ist vorzugsweise eine Aufforderung für einen Benutzer eine bestimmte Geste, wie etwa ein Verdunkeln eines als Bildsensor ausgebildeten Sensors, beispielsweise mit der Hand oder einem Finger, auszuführen oder ein bestimmtes Geräusch, wie etwa ein Klatschen, auszuführen. Durch die Aufforderung wird versucht den Benutzer dazu zu bewegen den Sensor in eine besondere oder vordefinierte Aufnahmesituation zu bringen, in der Hardwaremerkmale besser oder schneller erkennbar sind. So kann das Verfahren verbessert oder beschleunigt werden.

Gemäß einer weiteren Ausführungsform wird das Verfahren zur Authentifizierung einer Sendervorrichtung mit einem Sensor bei einer Empfängervorrichtung durch spezifische Mechanismen der Kommunikation zwischen den Komponenten erweitert und präzisiert. Der Sensor, der in dieser Ausführungsform verwendet wird, ist ein Bildsensor. Beispielsweise entspricht der Bildsensor einem CCD-Sensor oder einem anderen Sensor zur Aufnahme von zweidimensionalen Abbildern. Der Bildsensor kann jedoch auch zur Aufnahme von dreidimensionalen Bilder ausgebildet sein und einem Lidar-Sensor, einem PMD-Sensor (Photonic Mixing Device) einer TOF-Kamera, die auch als Time-Of-Flight-Kamera bezeichnet werden kann, oder als mehrere Sensorelemente umfassende Sensoren einer Stereokamera entsprechen. Jedenfalls entsprechen die bereitgestellten Sensordaten, die von der Sendervorrichtung erfasst werden, Bilddaten oder Videodaten. Solche Daten können zweidimensionalen Bilddaten, aber auch Punktwolken oder anderen dreidimensionalen Bilddaten entsprechen. Diese Bilddaten oder Videodaten repräsentieren mindestens ein mit dem Bildsensor aufgenommenes Bild, eine mit dem Bildsensor aufgenommene Videosequenz oder einen mit dem Bildsensor kontinuierlich aufgenommenen Videostrom. Eine Videosequenz umfasst hierbei vorzugsweise einen zeitlich begrenzten Bereich von mit dem Bildsensor aufgenommenen Bildern oder Frames. Ein Videostrom umfasst vorzugsweise eine kontinuierliche Aufnahme von mit dem Bildsensor erfassten Bildern oder Frames. Die aufbereiteten Sensordaten entsprechen somit aufbereiteten Bilddaten oder aufbereiteten Videodaten.

Die Verwendung eines Bildsensors ermöglicht eine detaillierte Erfassung visueller Informationen, die für die Authentifizierung genutzt werden können. Bilddaten und Videodaten bieten eine reichhaltige Quelle an Informationen, die für die Erkennung von Hardwaremerkmalen, wie Sensorfehlern, genutzt werden können. Durch die Aufbereitung dieser Daten können spezifische Merkmale extrahiert und analysiert werden, was die Genauigkeit und Zuverlässigkeit des Authentifizierungsprozesses erhöht. Eine kontinuierliche Aufnahme von Videodaten ermöglicht eine Echtzeitüberwachung und -authentifizierung, was besonders in sicherheitskritischen Anwendungen von Vorteil ist. Die kontinuierliche Datenaufnahme stellt sicher, dass die Authentifizierungsdaten stets aktuell sind und auf den neuesten Informationen basieren. Weiter verbessert die Verarbeitung und Aufbereitung der Bild-und Videodaten die Effizienz des Verfahrens, da nur relevante und verarbeitete Daten für die Authentifizierung verwendet werden. Dies reduziert die Datenmenge, die übertragen und analysiert werden muss, und beschleunigt den gesamten Authentifizierungsprozess.

Darüber hinaus ermöglicht die Verwendung von Bild- und Videodaten eine vielseitige Anwendung des Verfahrens in verschiedenen Bereichen, wie der Zugangskontrolle, der Überwachung und der Videotelefonie. Die präzise Erkennung und Analyse von Hardwaremerkmalen in Bild- und Videodaten erhöht die Sicherheit und Zuverlässigkeit des Authentifizierungsverfahrens erheblich.

Gemäß einer weiteren Ausführungsform entsprechen die Sensordaten Videodaten. Die aufbereiteten Sensordaten entsprechen in diesem Fall aufbereiteten Videodaten, was beispielsweise umfasst, dass die Rohdaten des Sensors in ein Format umgewandelt werden, das für die weitere Verarbeitung und Analyse geeignet ist. Die Aufbereitung kann darüber hinaus noch weitere Verarbeitungsschritte umfassen.

Die aufbereiteten Videodaten umfassen mehrere Videoframes, die eine Videosequenz oder einen Videostrom bilden, wobei die Videoframes in einer bestimmten Reihenfolge angeordnet sind. Dies ist von entscheidender Bedeutung, da die Reihenfolge der Frames Informationen über die zeitliche Abfolge und die Integrität der Videodaten liefert. Die aufbereiteten Videodaten umfassen darüber hinaus Sequenzprüfdaten, die vorzugsweise als zusätzliche Daten, wie Metadaten oder Header, eingebettet sind, um die Integrität und Authentizität der Videosequenz zu gewährleisten. Die Sequenzprüfdaten können vorzugsweise auch nach Art einer Block-Chain in die einzelnen Frames eingefügt sein. Ein solches Verfahren wird auch als Image-Chaining bezeichnet und umfasst das kontinuierliche Hashing von Bildreihen.

Die Sequenzprüfdaten werden zur Verifikation der Reihenfolge jedes der Videoframes verwendet, um sicherzustellen, dass die Videoframes in der korrekten Reihenfolge vorliegen und keine Manipulation oder Datenverlust stattgefunden hat. Zusätzlich oder alternativ werden die Sequenzprüfdaten zur Verifikation der Zugehörigkeit jedes der Videoframes zu den aufbereiteten Videodaten in der Authentifikationsvorrichtung oder Empfängervorrichtung verwendet. Dies bedeutet, dass jeder Frame überprüft wird, ob er tatsächlich Teil der ursprünglichen Videosequenz ist, was eine zusätzliche Sicherheitsebene bietet, um sicherzustellen, dass die Videodaten nicht verändert oder gefälscht wurden. Diese Mechanismen der Kommunikation zwischen den Komponenten tragen erheblich zur Sicherheit und Zuverlässigkeit des Authentifizierungsverfahrens bei, indem sie sicherstellen, dass die Videodaten sowohl in ihrer Reihenfolge als auch in ihrer Zugehörigkeit authentisch und unverändert sind. Durch die Implementierung dieser zusätzlichen Merkmale wird das Verfahren robuster gegenüber Manipulationsversuchen und Datenkorruption, was die Vertrauenswürdigkeit und Sicherheit der gesamten Authentifizierungslösung erhöht.

Gemäß einer weiteren Ausführungsform ist der Sensor ein Mikrofon, wodurch die Sensordaten als Audiodaten spezifiziert werden. Diese Audiodaten repräsentieren mindestens eine mit dem Mikrofon aufgenommene Audiosequenz oder einen mit dem Mikrofon aufgenommenen Audiostrom, was die Art der erfassten Daten präzisiert und den Anwendungsbereich des Verfahrens erweitert. Eine Audiosequenz umfasst hierbei vorzugsweise einen zeitlich begrenzten Bereich von mit dem Mikrofon aufgenommenen Geräuschen. Ein Audiostrom umfasst vorzugsweise eine kontinuierliche Aufnahme von mit dem Mikrofon erfassten Geräuschen. Die aufbereiteten Sensordaten entsprechen somit aufbereiteten Audiodaten, die mehrere die Audiosequenz oder den Audiostrom bildende Audioframes mit einer spezifischen Reihenfolge sowie Sequenzprüfdaten umfassen. Als Audioframe kann beispielsweis ein Frequenzspektrum zu einem Zeitpunkt bezeichnet werden. Die Sequenzprüfdaten dienen der Verifikation der Reihenfolge jedes der Audioframes in den aufbereiteten Audiodaten und/oder der Zugehörigkeit jedes der Audioframes zu den aufbereiteten Audiodaten in der Authentifikationsvorrichtung oder Empfängervorrichtung.

Durch die Ausbildung des Sensors als Mikrofons und die Definition der Sensordaten als Audiodaten wird eine neue Dimension der Authentifizierung eröffnet, die insbesondere für Anwendungen im Bereich der Sprach- und Audioerkennung relevant ist. Die Verwendung von Audioframes und Sequenzprüfdaten stellt sicher, dass die Integrität und Authentizität der erfassten Audiodaten gewährleistet wird, indem die korrekte Reihenfolge und Zugehörigkeit der Audioframes überprüft wird. Dies erhöht die Sicherheit des Authentifizierungsverfahrens, da Manipulationen oder unautorisierte Änderungen der Audiodaten leichter erkannt werden können. Die Sequenzprüfdaten ermöglichen eine präzise Verifikation der Audiodaten, was besonders in sicherheitskritischen Anwendungen von Bedeutung ist.

Zudem eröffnet die Verwendung von Audiodaten neue Möglichkeiten für die Authentifizierung in Umgebungen, in denen visuelle Daten nicht verfügbar oder nicht ausreichend sind. Die beschriebenen Mechanismen der Kommunikation zwischen den Komponenten, insbesondere die Verifikation der Reihenfolge und Zugehörigkeit der Audioframes, tragen wesentlich zur Erhöhung der Zuverlässigkeit und Sicherheit des Authentifizierungsverfahrens bei und erweitern dessen Anwendungsbereich.

Gemäß einer weiteren Ausführungsform umfasst das Erkennen von mindestens einem Hardwaremerkmal in den aufbereiteten Sensordaten ein Erkennen von mindestens einem physikalischen Merkmal oder Fehler des Sensors. Demnach werden spezifische physikalische Merkmale oder Fehler des Sensors, wie beispielsweise ein oder mehrere RTN-Fehler (Random Telegraph Noise), berücksichtigt. RTN-Fehler sind charakteristische Rauschmuster, die in den Sensordaten auftreten können und als eindeutige Identifikatoren dienen. Das Erkennen dieser physikalischen Merkmale oder Fehler basiert auf den aufbereiteten Sensordaten, was bedeutet, dass die Daten zunächst durch die Sendervorrichtung verarbeitet und in eine Form gebracht werden, die die Erkennung solcher Merkmale ermöglicht. Diese aufbereiteten Sensordaten können insbesondere aufbereitete Videodaten oder Audiodaten sein, was die Flexibilität und Anwendbarkeit des Verfahrens auf verschiedene Arten von Sensoren erhöht. Durch die Einbeziehung von Videodaten oder Audiodaten als aufbereitete Sensordaten wird das Verfahren nicht nur auf Bildsensoren beschränkt, sondern kann auch auf andere Sensoren angewendet werden, die visuelle oder auditive Informationen erfassen. Dies erweitert das Anwendungsspektrum des Verfahrens erheblich und ermöglicht die Authentifizierung in einer Vielzahl von Szenarien, in denen unterschiedliche Sensortypen verwendet werden. Durch Erkennen von physikalischen Merkmalen der Sensoren wird die Robustheit und Zuverlässigkeit des Authentifizierungsprozesses erhöht. Es wird sichergestellt, dass die Authentisierungsdaten auf spezifischen, schwer zu fälschenden physikalischen Eigenschaften des Sensors basieren. Dies macht es potenziellen Angreifern erheblich schwieriger, die Authentifizierung zu umgehen, da sie nicht nur die erfassten Sensordaten, sondern auch die spezifischen physikalischen Merkmale oder Fehler des Sensors nachahmen müssten. Insgesamt wird so die Sicherheit und Genauigkeit des Authentifizierungsverfahrens verbessert, da die Authentisierungsdaten basierend auf den einzigartigen physikalischen Eigenschaften des Sensors erzeugt werden können.

Gemäß einer weiteren Ausführungsform erfolgt das Aufbereiten der erfassten Sensordaten in der Sendervorrichtung und/oder der Empfängervorrichtung und/oder der Authentifikationsvorrichtung. Diese Verteilung der Aufbereitungsprozesse ermöglicht eine flexible und effiziente Verarbeitung der Sensordaten, indem sie die Rechenlast auf mehrere Komponenten verteilt und somit die Gesamtleistung des Systems optimiert.

Das Aufbereiten der erfassten Sensordaten umfasst das Auswählen mindestens eines Teils der Sensordaten, insbesondere mindestens eines Bildbereichs eines mit dem Sensor aufgenommenen Bildes. Dies ermöglicht eine gezielte Analyse und Verarbeitung spezifischer Datenbereiche, wodurch die Genauigkeit und Relevanz der Authentifizierungsdaten erhöht wird.

Alternativ oder zusätzlich umfasst das Aufbereiten der erfassten Sensordaten das Auswählen mindestens eines Sequenzausschnitts, also einer Sequenz, und/oder mindestens eines Bildbereichs einer mit dem Sensor aufgenommenen Videosequenz. Diese Methode erlaubt eine präzise Extraktion relevanter Informationen aus Videodaten, was besonders nützlich ist, wenn nur bestimmte Teile einer Videosequenz für die Authentifizierung relevant sind. Eine solche Auswahl dient außerdem zur Reduzierung der Daten für die weitere Bearbeitung oder Übertragung. Diese Auswahl erfolgt vorzugsweise in der Empfängervorrichtung, der die vollständigen Videodaten, beispielsweise in Form eines Videoanrufs, zugeführt werden, und die dann für den Authentifizierungsprozess, also das Erzeugen von Authentisierungsdaten, nur ausgewählte, beispielsweise besonders relevante, Teile der Videodaten verwendet.

Alternativ oder zusätzlich umfasst das Aufbereiten der erfassten Sensordaten das Auswählen eines Sequenzausschnitts, also eine Sequenz, und/oder Frequenzbereichs einer mit dem Sensor aufgenommenen Audiosequenz. Diese Funktion ermöglicht die Fokussierung auf spezifische Audiosegmente oder Frequenzbereiche, die für die Authentifizierung entscheidend sein könnten, und trägt somit zur Verbesserung der Authentifizierungsgenauigkeit bei. Eine solche Auswahl dient außerdem zur Reduzierung der Daten für die weitere Bearbeitung oder Übertragung. Auch diese Auswahl erfolgt vorzugsweise in der Empfängervorrichtung, der die vollständigen Videodaten, beispielsweise in Form eines Audioanrufs, zugeführt werden, und die dann für den Authentifizierungsprozess, also das Erzeugen von Authentisierungsdaten, nur ausgewählte, beispielsweise besonders relevante, Teile der Audiodaten verwendet.

Alternativ oder zusätzlich umfasst das Aufbereiten der erfassten Sensordaten das Filtern, insbesondere Rauschfiltern, der Sensordaten. Durch das Filtern der Sensordaten werden unerwünschte Störungen und Rauschen entfernt, was zu einer klareren und präziseren Datengrundlage für die Authentifizierung führt. Das Filtern erfolgt vorzugsweise in der Sendervorrichtung.

Die Möglichkeit, die Aufbereitung der Sensordaten auf verschiedene Komponenten zu verteilen, ermöglicht eine bessere Ressourcennutzung und kann die Verarbeitungsgeschwindigkeit erhöhen. Durch die gezielte Auswahl und Filterung spezifischer Datenbereiche wird die Relevanz der analysierten Daten maximiert, was zu einer höheren Genauigkeit der Authentifizierung und/oder zur Reduzierung der zu übertragenden Daten führt. Diese Merkmale tragen insgesamt dazu bei, das Verfahren robuster und anpassungsfähiger an verschiedene Anwendungsszenarien zu machen.

Gemäß einer weiteren Ausführungsform entspricht der Sensor oder ein weiterer Sensor der Sendervorrichtung einem biometrischen Sensor, insbesondere dem Bildsensor oder einem weiteren Bildsensor oder einem Fingerabdrucksensor. Dies bedeutet, dass die Sendervorrichtung in der Lage ist, biometrische Daten zu erfassen, die eine höhere Sicherheit und Genauigkeit bei der Authentifizierung ermöglichen. Das Verfahren umfasst das Erzeugen von biometrischen Daten mit dem biometrischen Sensor, was bedeutet, dass die Sendervorrichtung die erfassten biometrischen Daten aufbereitet und für die Authentifizierung bereitstellt. Diese biometrischen Daten werden dann von der Sendervorrichtung an die Empfängervorrichtung und/oder die Authentifizierungsvorrichtung übertragen. Diese Übertragung kann über verschiedene Kommunikationsprotokolle erfolgen, wie beispielsweise drahtlose Netzwerke, Bluetooth oder andere sichere Kommunikationskanäle, um sicherzustellen, dass die Datenintegrität und Vertraulichkeit gewahrt bleiben.

Das Verfahren umfasst weiterhin das Verifizieren der biometrischen Daten mit der Empfängervorrichtung und/oder der Authentifizierungsvorrichtung in Abhängigkeit von den Identifikationsdaten. Dies bedeutet, dass die empfangenen biometrischen Daten mit zuvor hinterlegten Identifikationsdaten verglichen werden, um die Authentizität der Sendervorrichtung oder die Authentizität der Sendervorrichtung und zusätzlich eines Benutzers der Sendervorrichtung zu bestätigen.

Der Vergleich der biometrischen Daten erhöht die Sicherheit des Authentifizierungsverfahrens, da biometrische Merkmale, wie Fingerabdrücke oder Gesichtserkennungsdaten, schwerer zu fälschen sind als herkömmliche Passwörter oder PINs. Durch diese Ausführungsform wird die Sicherheit des Authentifizierungsverfahrens weiter verbessert, indem die Verwendung biometrischer Daten integriert wird.

Gemäß einer weiteren Ausführungsform umfasst das Verfahren ein Empfangen oder Auslesen eines Auswahlparameters oder eines Passworts. Ferner erfolgt das Aufbereiten der erfassten Sensordaten und/oder das Erkennen des Hardwaremerkmals und/oder eine Sensorauswahl der Sendervorrichtung in Abhängigkeit von dem empfangenen Auswahlparameter oder dem empfangenen Passwort. Dies ermöglicht eine dynamische Anpassung des Authentifizierungsprozesses. Dies bedeutet, dass beispielsweise die Empfängervorrichtung und/oder die Authentifikationsvorrichtung in der Lage ist, spezifische Sensordaten oder bestimmte Sensoren der Sendervorrichtung auszuwählen, wobei die Sendervorrichtung basierend auf den empfangenen Parametern oder Passwörtern entsprechende Daten erzeugt und als Sensordaten oder aufbereitete Sensordaten für die Empfängervorrichtung bereitstellt.

Gemäß einer weiteren Ausführungsform wird der Auswahlparameter von einem Eingabegerät für einen Benutzer, insbesondere der Empfängervorrichtung, empfangen.

Gemäß einer weiteren Ausführungsform wird, insbesondere im Fall, dass die Empfängervorrichtung mehrere Sensoren umfasst, und ein Auswahlparameter eine Sensorauswahl eines der mehreren Sensoren umfasst, genau der Sensor ausgewählt, der durch den Auswahlparameter definiert ist, um von dem ausgewählten Sensor die Sensordaten zu erfassen und genau diese Sensordaten den weiteren Schritten des Verfahrens, insbesondere den Schritten c) bis g), zuzuführen.

Gemäß einer weiteren Ausführungsform wird, insbesondere im Fall, dass der Auswahlparameter eine Anweisung für den Schritt des Aufbereitens der erfassten Sensordaten umfasst, beispielsweise ein Bereich, ein Teil, eine Sequenz und/oder ein Frequenzbereich der Sensordaten, der durch den Auswahlparameter definiert ist, für die weitere Verarbeitung ausgewählt, insbesondere, um in der Auswahl den Hardwareparameter zu erkennen.

Gemäß einer weiteren Ausführungsform wird, insbesondere im Fall, dass der Auswahlparameter eine Anweisung für den Schritt des Erkennens des Hardwaremerkmals umfasst, beispielsweise eine Definition des physikalischen Merkmals, das durch den Auswahlparameter definiert ist, die weitere Verarbeitung, nämlich die Erkennung für genau das durch den Auswahlparameter bezeichnete physikalische Merkmal, ausgeführt.

Vorzugsweise umfasst diese Ausführungsform das Empfangen mehrerer Auswahlparameter. Mit den empfangenen Auswahlparametern werden jeweils einer oder mehrere der Schritte des Authentifizierungsverfahrens ausgeführt, was bedeutet, dass die empfangenen Parameter direkt die Durchführung der einzelnen Schritte beeinflussen können. Dies könnte beispielsweise bedeuten, dass bestimmte Sensordaten nur dann aufbereitet oder bestimmte Hardwaremerkmale nur dann erkannt werden, wenn spezifische Auswahlparameter empfangen wurden. Insgesamt bringen diese neuen Merkmale eine erhöhte Sicherheit und Flexibilität in den Authentifizierungsprozess, indem sie es ermöglichen, dass die Sendervorrichtung dynamisch auf verschiedene Parameter reagieren kann und somit eine präzisere und anpassungsfähigere Authentifizierung gewährleistet wird.

Dies ist besonders relevant in Szenarien, in denen unterschiedliche Sicherheitsanforderungen oder variable Umgebungsbedingungen vorliegen, die eine flexible Anpassung des Authentifizierungsprozesses erfordern.

Gemäß einer weiteren Ausführungsform sind in der Authentifikationsvorrichtung oder der Empfängervorrichtung mehrere Auswahlparameter hinterlegt oder erzeugbar. Diese Auswahlparameter können verschiedene Kriterien und Bedingungen umfassen, wie sie beispielsweise in der vorgenannten Ausführungsform aufgeführt sind. Die Schritte des Verfahrens, insbesondere das Aktivieren des Sensors, das Erfassen und Aufbereiten der Sensordaten und/oder das Erkennen von Hardwaremerkmalen und das Erzeugen von Authentisierungsdaten, werden jeweils mindestens einem dieser Auswahlparameter zugeordnet und ausgeführt.

Vorzugsweise wird für jeden Auswahlparameter eine separate Authentifizierungsschleife durchlaufen, so dass ein Challenge-Response-Verfahren implementiert ist. Vorzugsweise wird somit ein Auswahlparameter von der Sendervorrichtung empfangen und dann in Abhängigkeit von dem Auswahlparameter Sensordaten oder aufbereitete Sensordaten bereitgestellt. Danach wird der nächste Auswahlparameter von der Sendervorrichtung empfangen und in Abhängigkeit von dem nächsten Auswahlparameter weitere Sensordaten oder weitere aufbereitete Sensordaten bereitgestellt. Dies setzt sich für eine vordefinierte Anzahl von Auswahlparametern fort.

Im Schritt des Vergleichens der Authentisierungsdaten mit den hinterlegten Identifikationsdaten wird die Sendervorrichtung nur dann bei der Empfängervorrichtung authentifiziert, wenn in allen durchgeführten Authentifizierungsschleifen ein positives Vergleichsergebnis erkannt wurde. Anderenfalls wird die Authentifizierung bei der Empfängervorrichtung abgelehnt.

So wird die Sicherheit des Authentifizierungsverfahrens weiter erhöht, da mehrere unabhängige Parameter berücksichtigt werden, was die Wahrscheinlichkeit eines erfolgreichen Angriffs oder einer Fehlidentifikation reduziert. Außerdem wird die Flexibilität des Systems gesteigert, da es möglich ist, spezifische Authentifizierungsanforderungen für unterschiedliche Anwendungsszenarien zu definieren und zu implementieren. Durch die Berücksichtigung mehrerer Auswahlparameter und die Durchführung der Authentifizierungsschritte für jeden dieser Parameter wird ein hohes Maß an Sicherheit und Zuverlässigkeit erreicht, was das Verfahren besonders geeignet für den Einsatz in sicherheitsrelevanten Bereichen macht.

Gemäß einer weiteren Ausführungsform werden vor dem ersten Ausführen der Schritte des Verfahrens Identifikationsdaten bereitgestellt, was bedeutet, dass diese Daten vorab verfügbar gemacht werden müssen, um den Vergleich und die Authentifizierung überhaupt durchführen zu können. Diese Identifikationsdaten können spezifische Informationen über die Sendervorrichtung enthalten, die für die Authentifikationsvorrichtung und/oder die Empfängervorrichtung relevant sind. Durch die Bereitstellung der Identifikationsdaten vor dem Vergleichsprozess wird sichergestellt, dass die Authentifikationsvorrichtung oder die Empfängervorrichtung über die notwendigen Informationen verfügt, um die Authentizität der Sendervorrichtung zu überprüfen. Dies erhöht die Sicherheit und Zuverlässigkeit des Authentifizierungsprozesses, da die Vergleichsdaten bereits vorliegen und nicht erst während des Authentifizierungsprozesses gesammelt werden müssen. Die Identifikationsdaten können beispielsweise spezifische Sensorcharakteristika des oder der Sensoren oder andere eindeutige Merkmale der Sendervorrichtung umfassen, die es ermöglichen, die Sendervorrichtung eindeutig zu identifizieren. Durch die Bereitstellung dieser Daten sind die Vergleichsdaten bereits vorab validiert und gespeichert. Dies reduziert die Wahrscheinlichkeit von Fehlern oder Manipulationen während des Authentifizierungsprozesses.

Außerdem umfasst das System eine Sendervorrichtung, eine Empfängervorrichtung und vorzugsweise eine Authentifikationsvorrichtung, wobei das System eingerichtet ist, das Verfahren zur Authentifizierung einer Sendervorrichtung mit einem Sensor bei einer Empfängervorrichtung auszuführen.

Die Sendervorrichtung, ausgestattet mit einem Sensor, insbesondere einem Bildsensor, wird aktiviert, um Sensordaten zu erfassen. Diese Daten werden anschließend aufbereitet und analysiert, um mindestens ein Hardwaremerkmal, wie einen Sensorfehler, zu erkennen. Die Authentisierungsdaten, die in Abhängigkeit von dem erkannten Hardwaremerkmal erzeugt werden, werden dann mit den hinterlegten Identifikationsdaten der Sendervorrichtung verglichen. Dieser Vergleich kann entweder von der Empfängervorrichtung oder einer separaten Authentifikationsvorrichtung durchgeführt werden, um ein positives oder negatives Vergleichsergebnis zu erhalten. Im Fall eines positiven Vergleichsergebnisses wird die Sendervorrichtung bei der Empfängervorrichtung authentifiziert, während bei einem negativen Vergleichsergebnis die Authentifizierung abgelehnt wird. Die Integration einer Authentifikationsvorrichtung in das System bietet zusätzliche Sicherheit, da sie eine unabhängige Instanz darstellt, die die Authentifizierungsdaten überprüft und somit Manipulationen oder unbefugten Zugriff verhindert.

Außerdem betrifft die Erfindung eine Vorrichtung, die speziell eingerichtet ist, die auf eine Empfängervorrichtung, eine Authentifikationsvorrichtung oder eine Sendervorrichtung bezogenen Schritte des Verfahrens auszuführen.

Ist die Vorrichtung eine Sendervorrichtung, ist diese zumindest eingerichtet, die Schritte a) bis c) auszuführen. Vorzugsweise ist die Sendervorrichtung eingerichtet Sequenzprüfdaten zu erzeugen und mit den Sensordaten oder den aufbereiteten Sensordaten auszusenden. Beispielsweise ist die Sendervorrichtung auch eingerichtet Auswahlparameter oder ein Passwort zu empfangen und das Aufbereiten der Sensordaten und/oder eine Auswahl des Sensors zum Erzeugen der Sensordaten in Abhängigkeit von dem Auswahlparameter oder dem Passwort auszuführen.

Ist die Vorrichtung eine Authentifizierungsvorrichtung ist diese zumindest eingerichtet, die Schritte d) bis g) auszuführen. Vorzugsweise ist die Authentifizierungsvorrichtung eingerichtet die Identifikationsdaten zu speichern oder abzurufen. Beispielsweise ist die Authentifizierungsvorrichtung auch eingerichtet, um die erfassten Sensordaten aufzubereiten durch Auswählen, mindestens eines Teils der Sensordaten, insbesondere mindestens eines Bildbereichs eines mit dem Sensor aufgenommenen Bildes, Auswählen mindestens eines Sequenzausschnitts oder einer Sequenz, und/oder mindestens eines Bildbereichs einer mit dem Sensor aufgenommenen Videosequenz oder Auswählen eines Sequenzausschnitts oder einer Sequenz, und/oder Frequenzbereichs einer mit dem Sensor aufgenommenen Audiosequenz. Weiter bevorzugt ist die Authentifizierungsvorrichtung eingerichtet einen oder mehrere Auswahlparameter zu erzeugen oder abzurufen und an die Sendervorrichtung zu übertragen.

Ist die Vorrichtung eine Empfängervorrichtung ist diese vorzugsweise eingerichtet, die Schritte d) bis g) auszuführen. Vorzugsweise ist die Empfängervorrichtung eingerichtet, die Identifikationsdaten zu speichern oder abzurufen. Beispielsweise ist die Empfängervorrichtung zudem eingerichtet, die erfassten Sensordaten aufzubereiten durch Auswählen mindestens eines Teils der Sensordaten, insbesondere mindestens eines Bildbereichs eines mit dem Sensor aufgenommenen Bildes, Auswählen mindestens eines Sequenzausschnitts oder einer Sequenz, und/oder mindestens eines Bildbereichs einer mit dem Sensor aufgenommenen Videosequenz oder Auswählen eines Sequenzausschnitts oder einer Sequenz, und/oder Frequenzbereichs einer mit dem Sensor aufgenommenen Audiosequenz. Weiter bevorzugt ist die Empfängervorrichtung eingerichtet einen oder mehrere Auswahlparameter zu erzeugen oder abzurufen und an die Sendervorrichtung zu übertragen. Die Empfängervorrichtung ist vorzugsweise auch eingerichtet, um Daten mit der Sendervorrichtung und/oder der Authentifizierungsvorrichtung auszutauschen.

Außerdem betrifft die Erfindung eine Software, die, wenn sie mit einem Prozessor ausgeführt wird, den Prozessor veranlasst, die auf ein System, eine Empfängervorrichtung, eine Authentifikationsvorrichtung oder eine Sendervorrichtung bezogenen Schritte des Verfahrens auszuführen.

Weitere Ausführungsformen ergeben sich anhand der in den Figuren näher erläuterten Ausführungsbeispielen. Hierbei zeigen:
- Figur 1: ein System gemäß einem Ausführungsbeispiel,
- Figur 2: die Schritte des Verfahrens gemäß einem Ausführungsbeispiel und
- Figur 3: das Verfahren gemäß einem weiteren Ausführungsbeispiel.

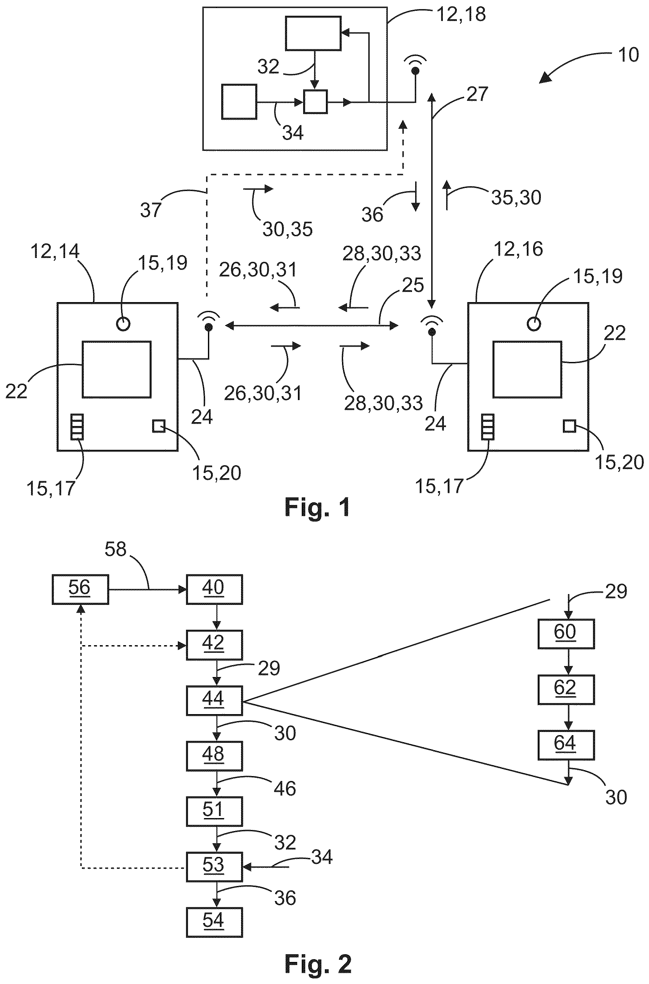

Figur 1 zeigt ein System 10 gemäß einem Ausführungsbeispiel der Erfindung. Das System 10 umfasst drei Vorrichtungen 12, die eingerichtet sind, das Verfahren gemäß einem Ausführungsbeispiel auszuführen. Eine der Vorrichtungen 12 entspricht einer Sendervorrichtung 14, eine weitere der Vorrichtungen 12 entspricht einer Empfängervorrichtung 16 und eine weitere der Vorrichtungen 12 entspricht einer Authentifikationsvorrichtung 18.

Die Sendervorrichtung 14 und die Empfängervorrichtung 16 umfassen mehrere Sensoren 15. Die Sendervorrichtung 14 und die Empfängervorrichtung 16 weisen demnach jeweils einen als Mikrofon 17 ausgebildeten Sensor 15 einen als Frontkamera 19 ausgebildeten Sensor 15 und einen als biometrischen Sensor 20, beispielsweise als Fingerabdrucksensor, ausgebildeten Sensor 15 auf. Die Frontkamera 19 umfasst oder entspricht einem Bildsensor, der auch als Videosensor bezeichnet werden kann. Außerdem umfassen die Sendervorrichtung 14 sowie die Empfängervorrichtung 16 jeweils eine Anzeige 22.

Ferner weisen die Sendervorrichtung 14 und die Empfängervorrichtung 16 jeweils eine Drahtlosschnittstelle 24 auf. Mit den Drahtlosschnittstellen 24 ist eine Datenverbindung 25 zwischen der Sendervorrichtung 14 und der Empfängervorrichtung 16 herstellbar, um über die Datenverbindung 25 Daten miteinander auszutauschen. Auch die Authentifikationsvorrichtung 18 umfasst eine solche Datenschnittstelle 24. Eine weitere Datenverbindung 27 kann damit zwischen der Empfängervorrichtung 16 und der Authentifikationsvorrichtung 18 bereitgestellt werden.

Die Sendervorrichtung 14 und die Empfängervorrichtung 16 sind beispielsweise eingerichtet, um eine Videotelefonie auszuführen. Das heißt, mit der Frontkamera 19 der Sendervorrichtung 14 bereitgestellte und vorzugsweise von der Sendervorrichtung 14 aufbereitete Videodaten 26 sowie mit dem Mikrofon 17 der Sendervorrichtung 14 bereitgestellte und vorzugsweise von der Sendervorrichtung 14 aufbereitete Audiodaten 28 können über die Datenverbindung 25 an die Empfängervorrichtung 16 zur Darstellung mit der Anzeige 22 übertragen werden. Entsprechend können solche aufbereitete Videodaten 26 und aufbereiteten Audiodaten 28 auch von der Empfängervorrichtung 16 an die Sendervorrichtung 14 zur Darstellung mit der Anzeige 22 der Sendervorrichtung 14 übertragen werden. Die aufbereiteten Videodaten 26 und die aufbereiteten Sensordaten können jeweils auch allgemein als aufbereitete Sensordaten 30 bezeichnet werden.

Vorzugsweise sind die Sendervorrichtung 14 und die Empfängervorrichtung 16 daher im Wesentlichen gleichartig ausgebildet. Die Sendervorrichtung 14 und die Empfängervorrichtung 16 können beispielsweise jeweils einem standardisierten Mobiltelefon oder tragbarem Computer entsprechen, auf dem ein Computerprogrammprodukt gemäß der Erfindung ausgeführt wird, um die Schritte des Verfahrens auszuführen.

Demnach werden beispielsweise zwischen der Sendervorrichtung 14 und der Empfängervorrichtung 16 nach dem Beginn einer Videotelefonie bis zum Ende einer Videotelefonie kontinuierlich aufbereitete Videodaten 26, die einem Videostrom 31 entsprechen, und aufbereitete Audiodaten 28, die einem Audiostrom 33 entsprechen, ausgetauscht.

Vorzugsweise werden insbesondere die mit der Empfängervorrichtung 16 empfangenen aufbereiteten Sensordaten 30, die beispielsweise aufbereiteten Videodaten 26 entsprechen, in der Empfängervorrichtung 16 weiterverarbeitet und beispielsweise zur Darstellung mit der Anzeige 22 der Empfängervorrichtung 16 genutzt. Die weitere Verarbeitung kann auch eine weitere Aufbereitung umfassen, bei der ein Teil der aufbereiteten Sensordaten 30, nämlich eine Sequenz 35, wie ein Teil der aufbereiteten Videodaten, die auch als Sequenz von Videoframes oder kurz als Videosequenz bezeichnet werden kann, aus den aufbereiteten Sensordaten 30 extrahiert wird.

Die aufbereiteten Sensordaten 30 oder die Sequenz 35 wird dann an die Authentifikationsvorrichtung 18 übertragen. Die Authentifikationsvorrichtung 18 ermittelt aus den aufbereiteten Sensordaten 30 oder der Sequenz 35 Authentisierungsdaten 32. Zur Ermittlung der Authentisierungsdaten 32 werden Hardwaremerkmale des Sensors 15, mit dem die aufbereiteten Sensordaten 30 bereitgestellt wurden, wie beispielsweise mit der Frontkamera 19, in den aufbereiteten Sensordaten 30, wie beispielsweise den aufbereiteten Videodaten 28, erkannt. Beispielsweise werden die Authentisierungsdaten 32 basierend auf sogenannten Physikalisch Unklonbaren Funktionen (PUFs), die den aufbereiteten Videodaten 28 entnommen werden können, erzeugt.

Die Authentisierungsdaten 32 werden mit für die Sendervorrichtung 14 hinterlegten Identifikationsdaten 34 verglichen und im Fall, dass die Authentisierungsdaten 32 zu den Identifikationsdaten 34 passen, wird die Sendervorrichtung 14 bei der Empfängervorrichtung 16 über eine Authentifikationsnachricht, die ein Vergleichsergebnis 36 umfasst, authentifiziert.

Gemäß einem alternativen hier nicht dargestellten Ausführungsbeispiel werden die aufbereiteten Sensordaten 30 an die Empfängervorrichtung 16 von der Sendervorrichtung 14 übertragen und gleichzeitig zumindest ein Teil der aufbereiteten Sensordaten 30, wie beispielsweise eine Sequenz, über eine dritte Datenverbindung 37, die lediglich als strichlierte Linie dargestellten ist, direkt an die Authentifikationsvorrichtung 18 gesendet. Die Authentifikationsvorrichtung 18 authentifiziert dann mit der Authentifikationsnachricht, umfassend das Vergleichsergebnis 36, entsprechend die Sendervorrichtung 14 direkt bei der Empfängervorrichtung 16. Gemäß einem weiteren hier nicht dargestellten Ausführungsbeispiel ist die Authentifikationsvorrichtung 18 Bestandteil der Empfängervorrichtung 16. Die Datenübertragung zwischen der Empfängervorrichtung 16 und der Authentifikationsvorrichtung 18 entspricht dann einer internen Datenübertragung innerhalb der Empfängervorrichtung 16. Gemäß einem weiteren hier nicht dargestellten Ausführungsbeispiel ist auch die Sendervorrichtung 14 oder die Authentifikationsvorrichtung 18 eingerichtet, die Empfängervorrichtung 16 auf analoge Weise zu authentifizieren. Hierzu wäre dann ebenfalls die dritte Datenverbindung 37 verwendbar.

Figur 2 zeigt die Schritte des Verfahrens gemäß einem Ausführungsbeispiel. In einem Schritt 40 wird ein Sensor 15 einer Empfängervorrichtung 16 aktiviert. Im Schritt 42 werden mit dem Sensor 15 Sensordaten 29 erfasst. Im Schritt 44 werden die erfassten Sensordaten 29 aufbereitet und als aufbereitete Sensordaten 30 ausgegeben. Im Schritt 48 wird ein Hardwaremerkmal 46 in den aufbereitete Sensordaten 30 erkannt. Das Hardwaremerkmal 46 wird dann einem Schritt 51 zugeführt, in dem Authentisierungsdaten 32 erzeugt werden, wobei die Authentisierungsdaten 32 in einem Schritt 53 mit Identifikationsdaten 34 verglichen werden. In Abhängigkeit vom Vergleich im Schritt 53 wird ein Vergleichsergebnis 36 ausgegeben und die Sendervorrichtung 14 bei der Empfängervorrichtung 16 im Schritt 54 authentifiziert.

Zusätzlich kann das Verfahren optional einen weiteren Schritt 56 umfassen, der das Bereitstellen eines Auswahlparameters 58 umfasst. Die Schritte 40 bis 54 werden dann in Abhängigkeit von dem im Schritt 56 bereitgestellten Auswahlparameter 58 ausgeführt. Dar Auswahlparameter 58 umfasst beispielsweise eine Auswahl eines von mehreren Sensoren 15 der Sendervorrichtung 14, so dass im Schritt 40 bei der Aktivierung genau der Sensor 15 aktiviert wird, der durch den Auswahlparameter 58 vorgegeben wird. Entsprechend werden im Schritt 42 Sensordaten des ausgewählten oder aktivierten Sensors 15 erfasst und diese im Schritt 44 aufbereitet.

Gemäß einem weiteren Ausführungsbeispiel, dass in Figur 2 durch eine strichlierte Line verdeutlicht ist, kann der Schritt 56 mehrfach ausgeführt werden, indem im Schritt 53, nach dem Vergleich im Fall eines positiven Vergleichsergebnisses 36 ein weiterer Auswahlparameter 58 vorgegeben wird und die Schritte erneut ausgeführt werden. Der Schritt 40 des Aktivierens ist hier optional und kann übersprungen werden, wenn der Sensor 15 bereits aktiviert ist.

Das Aufbereiten im Schritt 44 umfasst zudem vorzugsweise mehrere Teilschritte, wobei im Schritt 60 die erfassten Sensordaten 29 gefiltert werden, im Schritt 62 die gefilterten Sensordaten von der Sendervorrichtung 14 an die Empfängervorrichtung 16 übertragen werden und im Schritt 64 eine Auswahl getroffen wird, die beispielsweise eine Auswahl einer Sequenz 35 der Sensordaten umfasst. Die Auswahl der Sequenz 35 der gefilterten Sensordaten entspricht dann den aufbereiteten Sensordaten 30.

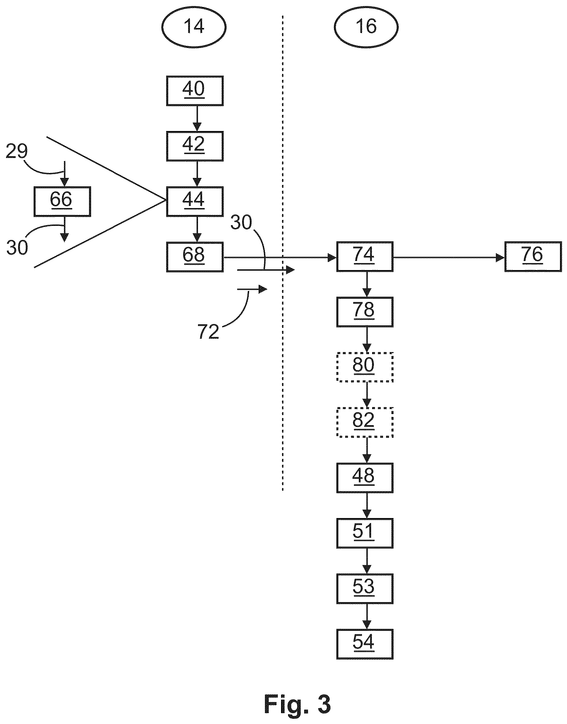

Figur 3 zeigt ein weiteres Ausführungsbeispiel des Verfahrens, wobei hier die Schritte der Sendervorrichtung 14 und der Empfängervorrichtung 16 zugeordnet sind. Von der Sendervorrichtung 14 wird, wie in Figur 2 bereits dargestellt wurde, zunächst im Schritt 40 ein Sensor 15 aktiviert und im Schritt 42 die Sensordaten 29 erfasst. Der Schritt 40 ist optional und wird nur dann ausgeführt, wenn der Sensor 15 noch nicht aktiviert wurde. Im Schritt 44 werden die Sensordaten 29 aufbereitet. Optional kann das Aufbereiten 44 noch das Erzeugen von Sequenzprüfdaten 72 und Hinzufügen der Sequenzprüfdaten 72 zu den aufbereiteten Sensordaten 30 in einem Schritt 66 umfassen. Im Schritt 68 werden dann die aufbereiteten Sensordaten 30, optional mit Sequenzprüfdaten 72, von der Sendervorrichtung 14 an die Empfängervorrichtung 16 gesendet.

Im Schritt 74 werden von der Empfängervorrichtung 16 die aufbereiteten Sensordaten 30 empfangen und im Schritt 76 nach weiterer Verarbeitung wiedergegeben. Gleichzeitig werden die aufbereiteten Sensordaten 30, wenn diese beispielsweise aufbereiteten Videodaten 26 entsprechen, einem Schritt 78 zugeführt, in dem eine Sequenz 35 extrahiert wird. Die Schritte 80 und 82 sind optional und werden nur dann ausgeführt, wenn die aufbereiteten Sensordaten 30 Sequenzprüfdaten 35 umfassen. Im Schritt 80 werden die Sequenzprüfdaten aus den aufbereiteten Sensordaten 30 extrahiert und im Schritt 82 wird die Reihenfolge von Videoframes in den aufbereiteten Videodaten 26 in der Sequenz 35 geprüft. Im weiteren Schritt 48 wird dann ein Hardwaremerkmal 46 des Sensors 15 in der Sequenz 35 erkannt, der dem aktivierten Sensor 15 der Sendervorrichtung 14 entspricht. Im Schritt 51 werden Authentisierungsdaten 32 in Abhängigkeit von den Hardwaremerkmalen erzeugt. Daraufhin werden die Authentisierungsdaten 32 mit Identifikationsdaten 34 im Schritt 53 verglichen und ein Vergleichsergebnis 36 erzeugt, um im Schritt 54 die Empfängervorrichtung 16 im Fall eines positiven Vergleichsergebnisses 36 zu authentifizieren oder im Fall eines negativen Vergleichsergebnisses 36 eine Authentifizierung zu versagen, also abzulehnen.

### Bezugszeichenliste

- 10: System
- 12: Vorrichtungen
- 14: Sendervorrichtung
- 15: Sensoren
- 16: Empfängervorrichtung
- 17: Mikrofon
- 18: Authentifikationsvorrichtung
- 19: Frontkamera
- 20: biometrischer Sensor
- 22: Anzeige
- 24: Drahtlosschnittstellen
- 25: Datenverbindung
- 26: aufbereitete Videodaten
- 27: weitere Datenverbindung
- 28: aufbereitete Audiodaten
- 29: erfasste Sensordaten
- 30: aufbereitete Sensordaten
- 31: Videostrom
- 32: Authentisierungsdaten
- 33: Audiostrom
- 34: Identifikationsdaten
- 35: Sequenz
- 36: Vergleichsergebnis
- 37: dritte Datenverbindung
- 40: Aktivieren Sensor einer Empfängervorrichtung
- 42: Erfassen Sensordaten mit Sensor
- 44: Aufbereiten der erfassten Sensordaten und Ausgeben dieser als aufbereitete Sensordaten
- 46: Hardwaremerkmal
- 48: Erkennen Hardwaremerkmal
- 51: Erzeugen Authentisierungsdaten
- 53: Ausgeben Vergleichsergebnis
- 53: Vergleichen Authentisierungsdaten mit Identifikationsdaten
- 54: Authentifizieren Sendervorrichtung bei der Empfängervorrichtung
- 56: Bereitstellen eines Auswahlparameters
- 58: Auswahlparameter
- 60: Filtern Sensordaten
- 62: Übertragen der gefilterten Sensordaten von der Sensorvorrichtung an die Empfängervorrichtung
- 64: Treffen einer Auswahl
- 66: Erzeugen von Sequenzprüfdaten und Hinzufügen der Sequenzprüfdaten zu den aufbereiteten Sensordaten
- 68: Senden Sensordaten von der Sendervorrichtung an die Empfängervorrichtung
- 70: Videostrom
- 72: Sequenzprüfdaten
- 74: Empfangen aufbereitete Sensordaten
- 76: Wiedergabe aufbereitete Sensordaten
- 78: Extrahieren Sequenz
- 80: Extrahieren Sequenzprüfdaten
- 82: Prüfen Reihenfolge von Videoframes in den aufbereiteten Videodaten

## Patentansprüche

1. Verfahren zur Authentifizierung einer Sendervorrichtung (14) mit einem Sensor (15) bei einer Empfängervorrichtung (16), umfassend die Schritte:
a) Vorzugsweise Aktivieren des Sensors (15), insbesondere eines Bildsensors, der Sendervorrichtung (14),
b) Erfassen von Sensordaten (29) des Sensors (15) durch die Sendervorrichtung (14),
c) Aufbereiten der erfassten Sensordaten (29),
d) Erkennen mindestens eines Hardwaremerkmals (46), wie eines Sensormerkmals, beispielsweise eines Sensorfehlers, in den aufbereiteten Sensordaten (30),
e) Erzeugen von Authentisierungsdaten (32) in Abhängigkeit von dem erkannten Hardwaremerkmal (46),
f) Vergleichen der Authentisierungsdaten (32) mit für die Sendervorrichtung (14) hinterlegten Identifikationsdaten (34) zum Erhalten eines positiven oder negativen Vergleichsergebnisses (36) mit einer von der Sendervorrichtung (14) unterschiedlichen Authentifikationsvorrichtung (18) oder Empfängervorrichtung (16) und
g) Authentifizieren der Sendervorrichtung (14) bei einer Empfängervorrichtung (16) im Fall eines positiven Vergleichsergebnisses (36) und Ablehnen einer Authentifizierung bei der Empfängervorrichtung (16) im Fall eines negativen Vergleichsergebnisses (36).

2. Verfahren nach Anspruch 1, wobei
i) die aufbereiteten Sensordaten (30) von der Sendervorrichtung (14) an die Authentifikationsvorrichtung (18) gesendet werden und die Authentifikationsvorrichtung (18) die Authentisierungsdaten (32) erzeugt und mit den Identifikationsdaten (34) vergleicht oder
ii) die aufbereiteten Sensordaten (30) von der Sendervorrichtung (14) an die Empfängervorrichtung (16) und von der Empfängervorrichtung (16) an die Authentifikationsvorrichtung (18) gesendet werden und die Authentifikationsvorrichtung (18) die Authentisierungsdaten (32) erzeugt und mit den Identifikationsdaten (34) vergleicht oder
iii) die aufbereiteten Sensordaten (30) von der Sendervorrichtung (14) an die Empfängervorrichtung (16), von der Empfängervorrichtung (16) die Authentisierungsdaten (32) erzeugt und die Authentisierungsdaten (32) an die Authentifikationsvorrichtung (18) von der Empfängervorrichtung (16) gesendet werden, wobei die Authentifikationsvorrichtung (18) die Authentisierungsdaten (32) mit den Identifikationsdaten (32) vergleicht oder
iv) die Authentisierungsdaten (32) aus den aufbereiteten Sensordaten (30) in der Sendervorrichtung (14) erzeugt und an die Authentifikationsvorrichtung (18), die Empfängervorrichtung (16) oder die Empfängervorrichtung (16) zur Weiterleitung an die Authentifikationsvorrichtung (18) gesendet werden, wobei die Authentifikationsvorrichtung (18) die Authentisierungsdaten (32) mit den Identifikationsdaten (34) vergleicht oder
v) die aufbereiteten Sensordaten (30) von der Sendervorrichtung (14) an die Empfängervorrichtung (16) gesendet werden und die Empfängervorrichtung (16) die Authentisierungsdaten (32) erzeugt und vorzugsweise mit den Identifikationsdaten (34), die besonders bevorzugt in der Empfängervorrichtung (16) hinterlegt sind, vergleicht.

3. Verfahren nach Anspruch 1 oder 2, wobei der Sensor (15) ein Bildsensor ist und die erfassten Sensordaten (29) Bilddaten oder Videodaten entsprechen, die mindestens ein mit dem Bildsensor aufgenommenes Bild, eine mit dem Bildsensor aufgenommen Videosequenz oder einen mit dem Bildsensor kontinuierlich aufgenommenen Videostrom repräsentieren, und die aufbereiteten Sensordaten (30) aufbereiteten Bilddaten oder aufbereiteten Videodaten (26) entsprechen.

4. Verfahren nach Anspruch 3, wobei die Sensordaten (29) Videodaten und die aufbereiteten Sensordaten (30) aufbereiteten Videodaten (26) entsprechen, wobei die aufbereiteten Videodaten (26) mehrere die Videosequenz oder den Videostrom bildende Videoframes mit einer Reihenfolge sowie Sequenzprüfdaten (72) umfassen, wobei die Sequenzprüfdaten (72) zur Verifikation der Reihenfolge jedes der Videoframes in den aufbereiteten Videodaten (26) und/oder der Zugehörigkeit jedes der Videoframes zu den aufbereiteten Videodaten (26) in der Authentifikationsvorrichtung (18) oder Empfängervorrichtung (16) verwendet werden.

5. Verfahren nach Anspruch 1 oder 2, wobei der Sensor (15) ein Mikrofon (17) ist und die erfassten Sensordaten (29) Audiodaten entsprechen, die mindestens eine mit dem Mikrofon (17) aufgenommene Audiosequenz oder einen mit dem Mikrofon (17) aufgenommenen Audiostrom repräsentieren, und die aufbereiteten Sensordaten (30) aufbereiteten Audiodaten (28) entsprechen und vorzugsweise die aufbereiteten Audiodaten (28) mehrere die Audiosequenz oder den Audiostrom bildende Audioframes mit einer Reihenfolge sowie Sequenzprüfdaten (72) umfassen, wobei die Sequenzprüfdaten (72) zur Verifikation der Reihenfolge jedes der Audioframes in den aufbereiteten Audiodaten und/oder Zugehörigkeit jedes der Audioframes zu den aufbereiteten Audiodaten (28) in der Authentifikationsvorrichtung (18) oder Empfängervorrichtung (16) verwendet werden.

6. Verfahren nach einem der vorhergehenden Ansprüche, wobei das Erkennen von mindestens einem Hardwaremerkmal (46) in den aufbereiteten Sensordaten (30) dem Erkennen von mindestens einem physikalischen Merkmal des Sensors oder Fehler des Sensors, insbesondere eines RTN-Fehlers des Sensors, basierend auf den aufbereiteten Sensordaten (30), insbesondere aufbereiteten Videodaten (28) oder Audiodaten, entspricht.

7. Verfahren nach einem der vorhergehenden Ansprüche, wobei das Aufbereiten der erfassten Sensordaten (29) in der Sendervorrichtung (14) und/oder der Empfängervorrichtung (16) und/oder der Authentifikationsvorrichtung (18) erfolgt und vorzugsweise das Aufbereiten der erfassten Sensordaten (29) das Auswählen
- mindestens eines Teils der Sensordaten (30), insbesondere mindestens eines Bildbereichs eines mit dem Sensor (15) aufgenommenen Bildes,
- mindestens einer Sequenz (35) und/oder mindestens eines Bildbereichs einer mit dem Sensor (15) aufgenommenen Videosequenz oder
- einer Sequenz (35) und/oder Frequenzbereichs einer mit dem Sensor (15) aufgenommenen Audiosequenz, und/oder
- das Filtern, insbesondere Rauschfiltern, der Sensordaten (30) umfasst.

8. Verfahren nach einem der vorhergehenden Ansprüche, wobei der Sensor (15) oder ein weiterer Sensor der Sendervorrichtung (14) einem biometrischen Sensor (20), insbesondere einem Bildsensor oder einem Fingerabdrucksensor, entspricht und das Verfahren das Erzeugen von biometrischen Daten mit dem biometrischen Sensor (20), das Übertragen der biometrischen Daten von der Sendervorrichtung (14) an die Empfängervorrichtung (16) und/oder die Authentifizierungsvorrichtung (18) sowie das Verifizieren der biometrischen Daten mit der Empfängervorrichtung (16) und/oder die Authentifizierungsvorrichtung (18) in Abhängigkeit von den Identifikationsdaten (34) umfasst.

9. Verfahren nach einem der vorhergehenden Ansprüche, wobei das Verfahren das Empfangen oder Auslesen eines Auswahlparameters (58) oder eines Passworts umfasst und das Aufbereiten der erfassten Sensordaten (29) und/oder das Erkennen des Hardwaremerkmals (46) und/oder eine Sensorauswahl der Sendervorrichtung (14) in Abhängigkeit von dem empfangenen Auswahlparameter (58) oder dem empfangenen Passwort erfolgt, wobei vorzugsweise das Verfahren das Empfangen mehrerer Auswahlparameter (58) umfasst, mit denen jeweils einer oder mehrere der Schritte a) bis g) ausgeführt werden.

10. Verfahren nach Anspruch 9, wobei in der Authentifikationsvorrichtung (18) oder der Empfängervorrichtung (16) mehrere Auswahlparameter (58) hinterlegt sind oder erzeugt werden und vorzugsweise die Schritte a) bis f) und/oder c) bis f) und/oder d) bis f) jeweils mindestens einmal für jeden der Auswahlparameter (58) ausgeführt werden, wobei im Schritt f) die Sendervorrichtung (14) bei der Empfängervorrichtung (16) im Fall authentifizieren wird, dass in allen Schritten g) ein positives Vergleichsergebnisses erkannt wurde und anderenfalls eine Authentifizierung bei der Empfängervorrichtung (16) abgelehnt wird.

11. Verfahren nach einem der vorhergehenden Ansprüche, wobei vor dem ersten Ausführen der Schritte f) und g) Identifikationsdaten und vorzugsweise der Sendervorrichtung (14) für die Authentifikationsvorrichtung (18) und/oder die Empfängervorrichtung (16) bereitgestellt werden.

12. System (10) mit einer Sendervorrichtung (14), einer Empfängervorrichtung (16) und vorzugsweise einer Authentifikationsvorrichtung (18), wobei das System (10) eingerichtet ist, das Verfahren nach einem der Ansprüche 1 bis 11 auszuführen.

13. Vorrichtung, die eingerichtet ist, die auf eine Empfängervorrichtung (16), eine Authentifikationsvorrichtung (18) oder eine Sendervorrichtung (14) bezogenen Schritte des Verfahrens nach einem der Ansprüche 1 bis 11, insbesondere die Schritte d) bis g), auszuführen.

14. Software, die, wenn sie mit einem Prozessor ausgeführt wird, den Prozessor veranlasst, die auf eine Empfängervorrichtung (16), und/oder eine Sendervorrichtung (14) sowie vorzugsweise eine Authentifikationsvorrichtung (18) bezogenen Schritte des Verfahrens nach einem der Ansprüche 1 bis 11, insbesondere die Schritte d) bis g), auszuführen.
